# EUROPÄISCHE PATENTANMELDUNG

(11) **EP 1 526 160 A1**
(43) Veröffentlichungstag der Anmeldung: **27.04.2005**
(21) Anmeldenummer: 04024702.5
(22) Anmeldetag: 16.10.2004
(51) Int. Cl.: C09C 1/22, C01G 49/00

(54) **Thermostabile Zinkferrit-Farbpigmente, ein Verfahren zu ihrer Herstellung sowie deren Verwendung**

(30) Priorität: 24.10.2003 DE 10349810
(71) Anmelder: Bayer Chemicals AG, 51368 Leverkusen (DE)
(72) Erfinder: Rosenhahn, Carsten Dr., 47800 Krefeld (DE); Brun, Horst Dr., 40668 Meerbusch (DE); Oehlert, Wolfgang Dr., 47800 Krefeld (DE)

(57) **Zusammenfassung**

Die vorliegende Erfindung betrifft Zinkferrit-Farbpigmente mit einem Gehalt an Magnesium von 0,01 bis 4 Gew.- % ein Verfahren zu ihrer Herstellung sowie deren Verwendung. Sie betrifft insbesondere helle Zinkferrit-Farbpigmente mit verbesserter Thermostabilität.

## Beschreibung

Die vorliegende Erfindung betrifft Zinkferrit-Farbpigmente, ein Verfahren zu ihrer Herstellung sowie deren Verwendung. Sie betrifft insbesondere helle Zinkferrit-Farbpigmente mit verbesserter Thermostabilität.

Je nach stöchiometrischer Zusammensetzung, Zusatzstoffen, Teilchengrößen, Kristallform und Oberflächeneigenschaften kann das im Spinellgitter kristallisierende Zinkferrit als Ausgangsmaterial für Weichmagnete, als Korrosionsschutz oder als Farbpigment eingesetzt werden.

Als sog. "Tan"-Pigmente sind nicht-ferrimagnetische Farbpigmente im angelsächsischen Sprachraum bekannt geworden.

In US-A 38 32 455 ist die Herstellung der Zinkferrit-Pigmente beschrieben. Eine Fällung von Eisenoxidhydroxid aus Eisen(II)-sulfatlösung auf Zinkoxid oder Zinkcarbonat bei pH-Werten von 5 bis 6 und Temperaturen von 49 bis 52 °C wird filtriert, die Feststoffe gewaschen, getrocknet und geglüht.

Nach US-A 29 04 395 werden die Zinkferritpigmente entweder durch gemeinsame Fällung aus den entsprechenden eisen- und zinkhaltigen Lösungen mit anschließendem Filtrieren, Waschen, Trocknen und Glühen oder auch durch Glühen einer in wässriger Suspension gewonnenen innigen Mischung aus Eisenoxidhydroxid und Zinkoxid hergestellt. Die Glühung erfolgt bei Temperaturen bis zu 1.000 °C unter Zusatz von Katalysatoren, beispielsweise Salzsäure oder Zinkchlorid.

US-A 42 22 790 beschreibt, dass der Glühprozess zur Herstellung von Zink- oder Magnesiumferrit verbessert werden kann, wenn der Mischung Alkalimetallsilikat zugesetzt wird. Als Flockungsmittel für die Filtration kann Aluminiumsulfat zugegeben werden.

Die Zugabe von Al₂O₃ und P₂O₅ bildenden Verbindungen bei der Kalzinierung von chloridfreien farbreinen Zinkferritpigmenten wird in DE-A 31 36 279 beschrieben.

Farbreine Zinkferritpigmente ohne Zusatzstoffe können gemäß der EP-B 1 54 919 dadurch erhalten werden, dass nadelförmiges α-FeOOH bestimmter Teilchengröße und Oberfläche und Z inkoxid bestimmter Oberfläche eingesetzt werden.

Borsäure oder Borphosphat verbessert das Abkühlverhalten nach dem Glühen.

Schließlich wird in der JP-B 5 70 11 829 zur Herstellung hitzebeständiger gelber Zinkferrit-Farbpigmente Titanoxid zugesetzt.

In T.C. Patton, Pigment Handbook, Vol. 1, Properties and Economics, S. 347 und 348, John Wiley & Sons, New York 1973, werden die erhaltenen anisometrischen Zinkferrite beschrieben.

Da sie sich durch hervorragende Licht- und Wetterbeständigkeit sowie hohe Thermostabilität auszeichnen, werden sie auch anstelle von weniger thermostabilen Mischungen aus Eisenoxidgelb und Eisenoxidrot eingesetzt.

Insbesondere haben sie ihre Anwendung zur Einfärbung von Sandgranulaten, Kalksandsteinen, Emaillen, Keramikglasuren, Einbrennlacken und Kunststoffen gefunden.

Obwohl die Zinkferritpigmente bei hohen Temperaturen über 700 °C hergestellt werden, unterliegen sie in verschiedenen Systemen, insbesondere bei der Einfärbung von organischen Materialien, unterschiedlich starken Farbveränderungen. Deshalb können sie in diesen Systemen häufig nicht mehr als thermostabil angesehen werden. So zeigt sich bei der Einfärbung von Kunststoffen, dass die Farbtonverschiebung zu dunkleren, schmutzigen Tönen bereits ab etwa 250 °C so deutlich wird, dass eine Einfärbung mit Zinkferritpigmenten nicht mehr sinnvoll ist. Dieses ist speziell bei der Einfärbung von Kunststoffen der Fall, die höhere Verarbeitungstemperaturen erfordern wie z.B. Polyamid oder ABS-Kunststoffe.

DE-A 3 819 626 beschreibt die Herstellung thermostabiler Zinkferrit-Farbpigmente, ein Verfahren zu ihrer Herstellung sowie deren Verwendung beschrieben. Durch Zugabe einer Lithiumverbindung zu einer Ausgangsmischung von Zinkoxid und Eisenoxid werden Zinkferrit-Farbpigmente hergestellt, die Lithium enthalten. Diese Zinkferrit-Farbpigmente zeigen bei der Prüfung auf Hitzebeständigkeit in PE-HD nach DIN 53 772 einen Farbabstand nach DIN 6174 von 2,8 ΔE*-Einheiten der Proben, die bei 260 °C und bei der tiefstmöglichen Prüftemperatur (=200 °C) als Bezug hergestellt wurden. Bei Verarbeitungstemperaturen von 3 00 °C ergaben s ich 5,0 ΔE*-Einheiten. Diese Pigmente liegen im Farbort allerdings jedoch um mehr als 2,5 L*-Einheiten in der Helligkeit dunkler als undotierte Zinkferrite.

Der Erfindung lag die Aufgabe zugrunde, weitere Zinkferrit-Farbpigmente bereitzustellen, die eine gute vorzugsweise bessere Thermostabilität als die des Standes der Technik haben und vorzugsweise hell sind.

Diese Aufgabe wurde gelöst in Form von Zinkferrit-Farbpigmenten mit einem Gehalt an Magnesium von 0,01 bis 4 Gew.-%.

Für eine ausreichende thermische Stabilität bei der Einfärbung von Kunststoffen bei bis zu 300 °C und höher genügen vorzugsweise bereits die überraschend kleinen Zusatzmengen von 0,05 bis 0,6 Gew.-% Magnesium. Diese Pigmente eignen sich deshalb auch für die Einarbeitung in Polyamid oder ABS-Kunststoffen. Bei größeren Magnesium-Gehalten als 4 Gew.-% im Zinkferrit tritt eine deutliche Verschiebung des Pigment-Farbtons zu dunkleren Brauntönen ein.

Die Zinkferrit-Farbpigmente weisen vorzugsweise ein Farbabstand ΔE* nach DIN 53 772 bei 260 °C von < 3, besonders bevorzugt < 2,4, auf.

Die Zinkferrit-Farbpigmente weisen vorzugsweise ein Farbabstand ΔE* nach DIN 53 772 bei 300 °C von < 5, besonders bevorzugt < 4,0, auf.

Die Zinkferrit-Farbpigmente weisen vorzugsweise eine Helligkeit L*, gemessen in PE-HD Purton nach DIN 53 772 von > 52,5, besonders bevorzugt > 53,5, auf.

Die Zinkferrit-Farbpigmente weisen vorzugsweise eine Teilchengröße von 0,15 x 0.5 µm auf.

Gegenstand der Erfindung ist auch ein Verfahren zur Herstellung der erfindungsgemäßen Zinkferrit-Farbpigmente.

Dieses Verfahren ist dadurch gekennzeichnet, dass eine der Zusammensetzung der Zinkferrit-Farbpigmente entsprechende Ausgangsmischung von Zinkoxid und Eisenoxid enthaltenden oder ergebenden Rohstoffmischung oder Lösung vor oder während der Kalzinierung eine oder mehrere Magnesiumverbindungen in solchen Mengen zugegeben werden, dass nach der Kalzinierung 0,1 bis 4 Gew.-% Magnesium, bevorzugt 0,05 bis 0,4 Gew.-% Magnesium, im Zinkferrit-Farbpigment enthalten sind.

Als Magnesiumverbindungen im Rahmen der Herstellung der erfindungsgemäßen thermostabilen Zinkferrit-Farbpigmente werden vorzugsweise Magnesiumcarbonat, Magnesiumfluorid, Magnesiumchlorid, Magnesiumoxid, Magnesiumhydroxid, Magnesiumsulfat, Magnesiumnitrat, Magnesiumphosphat, Magnesiumsilikat, Magnesium-titanat, Magnesiumzirkonat, Magnesiumferrit, Magnesiumzinkat, Magnesiumborat, Magnesiumaluminat, Magnesiumstannat, Magnesiumaluminiumsilikat, sowie weitere allgemein bekannte Magnesiumsalze oder magnesiumsalzhaltige Verbindungen eingesetzt.

Aus praktischen Gründen werden bei trockenen Mischungen vorzugsweise Magnesiumcarbonat, bei noch zu filtrierenden Suspensionen vorzugsweise schwerlösliche Magnesiumverbindungen eingesetzt. Auch lassen sich vorzugsweise natürliche magnesiumhaltige Mineralien wie Magnesit oder Dolomit einsetzen. Ebenso ist vorzugsweise der Zusatz magnesiumorganischer Verbindungen möglich.

Die Prüfung auf Thermostabilität erfolgt nach DIN 53 772 von September 1981 durch 1 %ige Pigmentierung in thermoplastischen Kunststoffen, wobei die Farbabweichung der Probekörper bei Erhöhung der Einarbeitungstemperatur im Vergleich zur tiefstmöglichen Prüftemperatur bestimmt wird.

Die Messung der Helligkeit L* in PE-HD Purton erfolgt nach DIN 53 772 vom September 1981.

Der Vorteil des erfindungsgemäßen Verfahrens ist auch darin zu sehen, dass durch den geringen Zusatz an Magnesiumverbindungen die G lühtemperatur g egenüber die d es S tandes d er T echnik erniedrigt werden kann.

Gegenstand der vorliegenden Erfindung ist auch die Verwendung des erfindungsgemäßen Zinkferrit-Farbpigmentes zur Einfärbung von Einbrenn- oder Coil-Coat-Lacken, von Kunststoffen, Sandgranulaten, Kalksandsteinen, Emaillen und Keramik-Glasuren. Für den Fachmann ist die allgemeine Verwendung der erfindungsgemäßen Zinkferrit-Farbpigmente Stand der Technik. Beispielsweise werden bei der Einfärbung von Kunststoffen die erfindungsgemäßen Zinkferrit-Farbpigmente im aufgeschmolzenen Zustand hinzugefügt, gemischt und verarbeitet.

Anhand der nachfolgenden Beispiele wird die Erfmdung näher erläutert, ohne dass dadurch eine Einschränkung der Erfindung bewirkt werden soll.

### Beispiele

### Beispiel 1

9200 l einer homogenisierten wässrigen Suspension, enthaltend 5521 kg Goethit (entspr. 4859 kg Fe₂O₃) und 2413 kg Zinkoxid (mit 99,6 Gew.-% ZnO) werden filtriert, der Filterkuchen, enthaltend ca. 32 Gew.-% trockener Feststoff, mit 21,8 kg MgO in Form von Magnesiumcarbonat versetzt, in einem entsprechenden Mischaggregat innig vermischt und bei 810 °C ca. 30 Minuten geglüht. Nach dem Abkühlen wird der 0,3 Gew.-% Magnesium enthaltende Klinker gemahlen. Man erhält ein helles, leuchtend gelbbraunes Pigment.

Bei der Prüfung des erhaltenen Pigmentes auf Hitzebeständigkeit in PE-HD nach DIN 53 772 ergaben sich bei einer Pigmentierung von 1 Gew.-% nach Verarbeitung in einem Doppelwellenextruder und in der "Arburg"-Spritzgießmaschine Farbabstände nach DIN 6174 von 2,0 ΔE*-Einheiten bei den Proben, die bei 260 °C und bei der tiefstmöglichen Prüftemperatur (= 200 °C) als Bezug hergestellt wurden. Bei Verarbeitungstemperaturen von 300 °C ergaben sich 3,0 ΔE*-Einheiten.

### Beispiel 1 - Vergleich

Ohne Magnesiumzusatz wurden ΔE*-Einheiten von 6,8 bei 260 °C und 9,4 bei 300 °C Einarbeitungstemperatur gefunden. Im Vergleich zu Pigmenten, die gemäß DE 381 926 hergestellt worden sind, ist das erfindungsgemäß erzeugte Pigment in der Abtestung nach DIN 53 772 um mehr als eine Einheit heller.

### Beispiel 2

300 g einer Goethitsuspension (Fe-Gehalt als Fe₂O₃ 5,1%) werden nach Zugabe von 0,29 g Magnesiumcarbonat und 148 g ZnO in einem entsprechenden Mischaggregat innig vermischt und bei 850 °C ca. 30 Minuten geglüht. Nach dem Abkühlen wird der Klinker gemahlen. Man erhält ein helles, leuchtend gelbbraunes Pigment.

Die gefundenen Farbstände ergaben in PE-HD bei 260 °C 3,0 ΔE*-Einheiten, bezogen auf die bei 200 °C gespritzten Plättchen. Im Vergleich zu Pigmenten, die gemäß DE 381 926 hergestellt worden sind, ist das auf diese Art erzeugte Pigment in der Abtestung nach DIN 53 772 um mehr als 1,5 Einheiten heller.

| | **ΔE* bei 260 °C** | **ΔE* bei 300 °C** | **L* in Purton** |
|---|---|---|---|
| Beispiel 1 | 2,0 | 3,0 | 52,6 |
| Beispiel 1 - Vergleich | 6,8 | 9,4 | 54,1 |
| Beispiel 2 | 3,0 | < 5 | 53,0 |
| Bayferrox® 3950 der Firma Bayer | 10,3 | 14,9 | 54,6 |
| TAN 10 A der Firma Rockwood Pigments | 5,9 | 9,4 | 52,9 |
| Colortherm® Yellow 30 nach DE 3 819 626 | 1,7 | 3,8 | 51,8 |

## Patentansprüche

1. Zinkferrit-Farbpigmente mit einem Gehalt an Magnesium von 0,01 bis 4 Gew.-%.

2. Zinkferrit-Farbpigmente gemäß Anspruch 1, **dadurch gekennzeichnet, dass** der Gehalt an Magnesium 0,05 bis 0,6 Gew.-% beträgt.

3. Zinkferrit-Farbpigmente gemäß Ansprüchen 1 und 2, **dadurch gekennzeichnet, dass** die Pigmente ein Farbabstand ΔE* nach DIN 53 772 bei 260 °C von < 3,0, insbesondere < 2,4 aufweisen.

4. Zinkferrit-Farbpigmente gemäß Ansprüchen 1 und 2, **dadurch gekennzeichnet, dass** die Pigmente ein Farbabstand ΔE* nach DIN 53 772 bei 300 °C von < 5,0, insbesondere < 4,0, aufweisen.

5. Zinkferrit-Farbpigmente gemäß Ansprüchen 1 und 2, **dadurch gekennzeichnet, dass** die Pigmente eine Helligkeit L*, gemessen in PE-HD Purton nach DIN 53 772 von > 52,5, insbesondere > 53,5, aufweisen.

6. Verfahren zur Herstellung von Z inkferrit-Farbpigmenten g emäß e inem d er Ansprüche 1 bis 5, **dadurch gekennzeichnet, dass** eine der Zusammensetzung der Zinkferrit-Farbpigmente entsprechende Ausgangsmischung von Zinkoxid und Eisenoxid enthaltenden oder ergebenden Rohstoffmischung oder Lösung vor oder während der Kalzinierung eine oder mehrere Magnesiumverbindungen in solchen Mengen zugegeben werden, dass nach der Kalzinierung 0,1 bis 4 Gew.-% Magnesium, bevorzugt 0,05 bis 0,6 Gew.-% Magnesium, im Zinkferrit-Farbpigment enthalten sind.

7. Verwendung des Zinkferrit-Farbpigmentes gemäß einem oder mehrerer der Ansprüche 1 bis 5 zur Einfärbung in Einbrenn- oder Coil-Coat-Lacken, in Kunststoffen, Sandgranulaten, Kalksandsteinen, Emails und Keramik-Glasuren.
